Europäisches Patentamt

European Patent Office

Office européen des brevets

(11) Veröffentlichungsnummer : **0 164 052**
**B1**

(12) **EUROPÄISCHE PATENTSCHRIFT**

(45) Veröffentlichungstag der Patentschrift :
09.09.87

(51) Int. Cl.⁴ : **C 10 L   5/40**

(21) Anmeldenummer : 85106518.5

(22) Anmeldetag : 28.05.85

(54) Verfahren zum Herstellen von Brennstoffpellets,- Briketts oder dergleichen.

(30) Priorität : 05.06.84 CH 2724/84

(43) Veröffentlichungstag der Anmeldung :
11.12.85 Patentblatt 85/50

(45) Bekanntmachung des Hinweises auf die Patenter-
teilung : 09.09.87 Patentblatt 87/37

(84) Benannte Vertragsstaaten :
AT BE CH DE FR GB IT LI NL SE

(56) Entgegenhaltungen :
EP-A- 0 036 784
DE-A- 1 944 642
GB-A-   120 209
US-A- 3 695 891
Die Akte enthält technische Angaben, die nach dem
Eingang der Anmeldung eingereicht wurden und die
nicht in dieser Patentschrift enthalten sind.

(73) Patentinhaber : Gebrüder Bühler AG

CH-9240 Uzwil (CH)

(72) Erfinder : Wyss, Franz-Joachim
Sonnenbergstrasse 9a
CH-9240 Uzwil (CH)

EP 0 164 052 B1

## Beschreibung

Die Erfindung bezieht sich auf ein Verfahren zum Herstellen von Brennstoffpellets, -briketts nach dem Oberbegriff des Anspruches 1. Dabei soll unter « Pellets » oder « Briketts » gepresstes Material jeder Art und Grösse verstanden werden.

Bei der Herstellung von Brennstoffpellets, -briketts od. dgl. wird das brennbare Abfallmaterial im allgemeinen mit flüssigen Zusätzen versehen, um eine bessere Bindung der Abfallteilchen zu erzielen. So beschreibt die US-PS 3 910 775 ein Verfahren, bei dem das Abfallmaterial in zwei aufeinanderfolgenden Stufen einem Druck ausgesetzt wird, wobei in bzw. vor jeder Stufe dem Material Schlamm bzw. Abwasser beigemischt wird. Ein derartiges Verfahren besitzt aber den Nachteil, dass erst die flüssige Komponente beigegeben wird und hinterher aber wiederum durch Trocknen, Abquetschen u. dgl. entfernt werden muss. Der hierfür erforderliche Aufwand ist nicht unbeträchtlich und stellt daher die Rentabilität der Gewinnung von Brennstoff aus Abfällen in Frage. Trotzdem glaubte man bisher ohne den Zusatz einer flüssigen Komponente nicht auskommen zu können, wie auch aus der EP-OS 36 784 hervorgeht, gemäss welcher im Anschluss an den ersten einen Druck ausübenden Verfahrensschritt eine Trocknungsstufe vorgesehen sein muss.

Versuche, in einem einzigen Verfahrensschritt eine entsprechende Festigkeit der Brennstoffstücke zu erzielen, gelangen bisher nur teilweise und waren stark von der Beschaffenheit des Ausgangsmateriales, insbesondere von dessen an sich vorhandenen Feuchtigkeit bzw. Trockenheit abhängig. Meist wurde dadurch wiederum ein Trockenvorgang nötig, der einen entsprechenden Energieaufwand verursachte. Dieser Energieaufwand war umso höher, als das Material für den Formvorgang zur Erleichterung desselben erhitzt werden sollte, aus Gründen der entsprechenden Naturgesetzlichkeit heraus jedoch eine hohe Sekundärwärmezufuhr (über Doppelmantelgefässe od. dgl.) erforderlich war, wenn das trockene Material auf eine entsprechende Temperatur gebracht werden sollte.

Der Erfindung liegt die Aufgabe zugrunde, ein Verfahren aufzuzeigen, das eine entsprechende Festigkeit des stückigen Brennstoffproduktes ergibt, ohne dass gleichzeitig ein hoher Energieaufwand erforderlich wäre. Dies gelingt — ausgehend von einem Verfahren der eingangs genannten Art — erfindungsgemäss durch die kennzeichnenden Merkmale des Anspruches 1.

Die mechanisch erzeugte Hitze durch Anwendung von Druck und Reibung wirkt viel intensiver auf das Material ein und führt rascher zu einer Erwärmung als eine blosse äussere Wärmezufuhr. Es hat sich nun gezeigt, dass durch diese Behandlung Bedingungen geschaffen werden, die im gewissen Sinne denjenigen bei der Papiererzeugung ähnlich sind, wobei es zu einer Bindung und Verfilzung der einzelnen Materialteilchen kommt. Wenn dabei insbesondere die im Material vorliegenden Papierfasern eine hervorragende Rolle spielen, so seien darunter Fasern verstanden, die entweder bereits in Form von im Abfall vorkommendem Papier vorliegen, oder auch in Form von mehr oder minder losen Fasern, die an sich für die Papierbereitung geeignet sind. Wenn nun das so aufbereitete Material der zweiten Verfahrensstufe zugeführt wird, so genügt dann ein verhältnismässig kurzer Vorgang mit geringem Energieaufwand, um die Formgebung herbeizuführen. Aber auch der erste Verfahrensschritt bedeutet aufgrund der raschen Uebertragung der mechanisch erzeugten Hitze auf das behandelte Material bei hohem Wirkungsgrad eine Verringerung des Energieaufwandes. Dabei kann die Ausübung den Druck und Reibung ohne weiteres in einem beheizten Gehäuse vorgenommen werden, weniger um damit dem Material Wärme zuzuführen, sondern vielmehr zu dem Zwecke, um die Wärmeverluste aus der mechanisch erzeugten Wärmeenergie möglichst gering zu halten. Es wird später noch erläutert werden, dass zur Durchführung des Verfahrens bevorzugt ein Extruder mit mindestens einer Welle, vorzugsweise ein Doppelwellenextruder verwendet wird, und dass das Extrudergehäuse zweckmässig beheizbar ist. Gegenüber einem Nassverfahren, wie es die US-PS 3 910 775 beschreibt, ist dabei wesentlich, dass doch relativ trockenes Ausgangsmaterial verwendet wird.

Um einerseits die entsprechende Wärme mechanisch leichter erzeugen zu können, anderseits aber möglichst günstige Bedingungen für die der Papierfabrikation ähnliche Vorverfestigung zu erhalten, ist es wünschenswert, wenn der Feuchtigkeitsgehalt des Abfallmateriales vor dem ersten Verfahrensschritt nicht unter 20 Gewicht.% liegt und/oder der Papierfaseranteil um 50 Gew.% beträgt.

Die so erzeugte Hitze trägt teilweise auch zur Plastifizierung von im Abfallmaterial enthaltenen plastifizierbaren Bestandteilen bei, die dann selbst als Bindemittel wirken, und es ist zu diesem Zwecke vorteilhaft, wenn das im wesentlichen trockene Material durch die mechanisch erzeugte Hitze auf eine Temperatur von mindestens 60 °C, vorzugsweise von etwa 100 °C, gebracht wird. Wohl sind auch höhere Temperaturen denkbar, doch wird dadurch einerseits die Verpressbarkeit nicht verbessert, anderseits der Energieaufwand überflüssigerweise höher und letztlich besteht die Gefahr bei zu hohen Temperaturen, dass es zu Verlusten des Energieinhaltes des Materiales kommt. Wenn dabei von im wesentlichen trockenem Material die Rede ist, so sei darauf hingewiesen, dass ein gewisser Feuchtigkeitsgehalt im obigen Sinne zulässig ist, dass jedoch eine Art « Aufschlämmung » vermieden werden soll, wie sie bei bekannten Verfahren (vgl. die US 3 910 775) verwendet wurde.

Um das Binden der einzelnen Materialteilchen bzw. das Verfilzen zu beschleunigen bzw. zu verbessern, wird das Material zweckmässig Druck und Reibung unter gleichzeitigem intensiven Kneten und gegebenenfalls Zerkleinern ausgesetzt.

Da einerseits eine nicht allzu hohe Temperatur von etwa 100 °C (± 20 %) bevorzugt ist, anderseits nach Erreichen dieser Materialtemperatur ein weiteres Ausüben von Druck, Reibung und gegebenenfalls einer Knetbehandlung im Vergleich von Aufwand und Effekt in keinem besonders günstigen Verhältnis mehr steht, ist es vorteilhaft, wenn der erste Verfahrensschritt auf eine Dauer von einer halben Minute bis fünf Minuten und vorzugsweise auf etwa eine Minute beschränkt ist.

Während der Bearbeitung im ersten Verfahrensschritt können sich verschiedene Gase, vor allem aber aufgrund der Hitze Wasserdampf bilden. Es ist zweckmässig, wenn diese Gase entfernt werden und wenn daher während des ersten Verfahrensschrittes, gegebenenfalls unter Unterdruck, entgast wird.

Um den Energieaufwand weiterhin zu senken, ist es vorteilhaft, wenn der erste Verfahrensschritt in wenigstens zwei Stufen vorgenommen wird, wobei in jeder Stufe das Material komprimiert und anschliessend druckentlastet wird. Dadurch kann der absolute Druck geringer sein, wodurch einerseits an Energie und anderseits an Verschleiss eingespart wird. Zwar ist es für andere Verfahren und andere Verfahrensschritte bekannt, ein solches abwechselndes Komprimieren und Druckentlasten in wenigstens zwei Stufen durchzuführen, nicht jedoch bei einem Verfahren der eingangs genannten Art, wohl deshalb, weil bisher im ersten Verfahrensschritt nie ein Druck angewandt wurde, der zusammen mit der Reibung eine entsprechende Erhitzung mit sich brachte.

Auch für die Formgebung im zweiten Verfahrensschritt ist es zweckmässig, eine gewisse Einstellung der Restfeuchtigkeit des Materiales vorzunehmen, und es wird deshalb vorteilhaft das Material durch die Behandlung des ersten Verfahrensschrittes auf eine Restfeuchtigkeit unter 25 Gew.-%, vorzugsweise zwischen 12 und 25 Gew.-%, insbesondere zwischen 18 und 20 Gew.-%, gebracht, wobei der Bereich von 18 bis 20 Gew.-% für die Formgebung besonders günstig ist.

Es wurde oben bereits erwähnt, dass zur Durchführung des ersten Verfahrensschrittes ein mindestens eine Welle aufweisender Extruder bevorzugt verwendet wird. Für die Formgebung — also den zweiten der oben genannten Verfahrensschritte — wurden schon bisher verschiedenlich Extruder eingesetzt, auch in Verfahren mit nur einen einzigen Verfahrensschritt. Solche an sich bekannten Extruder werden also bevorzugt zur Durchführung des ersten Verfahrensschrittes verwendet, wogegen für den zweiten Verfahrensschritt sich zwar auch Extruder, besonders aber eine Rollenpelletpresse eignet. Es kann dabei die Konstruktion so gewählt sein, dass die Welle der Extruderschnecke verlängert ist und gleichzeitig zum Antrieb der Rollen der Pelletpresse dient, so dass mit einem einzigen Antrieb das Auslangen gefunden wird, wodurch gegebenenfalls eine weitere Reduzierung des Energieaufwandes möglich ist. Ausserdem ergibt sich so eine Vereinfachung der Vorrichtung. Das Mundstück des Extruders kann dabei im Prinzip jede beliebige Form haben, sofern nur gesichert ist, dass im Extrudergehäuse der zur Erzielung der entsprechenden Hitze erforderliche Druck gesichert ist. Die Höhe des notwendigen Druckes hängt aber auch von der erzielten Reibung ab (und umgekehrt). Daher kann das Mundstück des Extruders zur Erzielung von Formlingen beispielsweise entsprechend der FR-PS 2 320 135 siebartig ausgebildet sein, es kann aber auch entsprechend der FR-PS 2 323 340 einfach ein Druckventil in Form eines die Auslassöffnung verschliessenden Konusventiles oder auch einer Ventilklappe (entsprechend der Ausbildung bei Schneckenpumpen für die Einspeisung von Schüttgütern in pneumatische Leitungen) vorgesehen sein.

Dagegen ist es zweckmässig, wenn der verwendete Extruder mindestens eines der folgenden Merkmale besitzt:

der Extruder ist als Doppelwellenextruder ausgebildet;

der Extruder besitzt wenigstens einen Abschnitt mit Knetwerkzeugen, wie Stiften, paddelförmigen Schneckenabschnitten od. dgl.;

der Hohlraum zwischen Extrudergehäuse und Extruderwelle weist mindestens eine Verengung auf, die von einer Erweiterung gefolgt ist;

das Extrudergehäuse ist heizbar, vorzugsweise als Doppelmantelgehäuse für den Durchlass eines Wärmeträgers, ausgebildet;

der Extruder weist einen Gasauslass auf, der gegebenenfalls an einer Unterdruckquelle angeschlossen ist.

Auch die Verwendung eines Doppelwellenextruders ist für einstufige Verfahren bereits bekannt geworden. Hier dient er vor allem dazu, eine Knetarbeit auszuführen und die zur Erzeugung der Hitze erforderliche Reibarbeit zu leisten. Zur Durchführung von Knetarbeit kann aber der Extruder mit den — insbesondere von Kunststoffextrudern bekannten — Knetwerkzeugen versehen sein. Die Anwendung von Werkzeugen aus dem Kunststoffgebiet mag an sich überraschen, versteht sich jedoch daraus, dass beim vorliegenden Verfahren auf trockenem Wege eine Bindung erzielt werden soll.

Ebenso ist es für einstufige Verfahren (auch aus anderen Gebieten wie für die Sojaverarbeitung) bekannt, das Innere des Extruders mit Verengungen zu versehen, die von einer Erweiterung gefolgt sind, um so eine abwechselnde Komprimierung und Druckentlastung zu erzielen. Geeignete Konstruktionen dieser Art sind beispielsweise den US-PSen 3 695 891 oder 3 765 319 zu entnehmen. Es handelt sich dabei jeweils um Extruder mit einer einzigen Welle, doch können solche Konstruktionen analog auch für Doppelwellenextruder angewandt werden.

Der Zweck eines heizbaren Extrudergehäuses wurde oben bereits erläutert. Die Anordnung eines Gasauslasses kann analog zu jenen Konstruktionen erfolgen, wie sie aus der Kunststoffindustrie bekannt ist. So kann eine Extruderpresse gemäss der DE-OS 1 944 642 zur Anwendung kommen, wobei der Anschluss einer Unterdruckquelle im allgemeinen entfallen kann.

Im Rahmen der Erfindung sind verschiedene Abwandlungen möglich ; beispielsweise kann der erste Verfahrensschritt selbst in wenigstens zwei Schritte aufgeteilt sein, bei denen das Material nacheinander beispielsweise zwei Extruder durchläuft. Besonders vorteilhaft ist es, wenn bei Durchführung des vorliegenden Verfahrens von einer Müllfraktion ausgegangen wird, die entsprechend einem Verfahren gemäss der Fig. 6 der EP-OS 82 815 erhalten wird. Dabei wird bereits in einem ersten Schritt durch einen mindestens zwei Stufen umfassenden Siebvorgang in der zweiten Siebstufe mit einem relativ grossen Abstand der die Sieblöcher begrenzenden Siebelemente von 120 mm eine brennbare Fraktion mit einem Feuchtigkeitsgehalt von 25 % oder darüber erhalten. Durch nachfolgendes, selektives Zerkleinern des Siebabstosses, insbesondere in einer Trommelmühle, kann eine weitere brennbare Fraktion erhalten werden, die besonders reich an Papierfasern ist, wenn dem Abfallgemisch der Trommelmühle auch noch Feuchtigkeit, z. B. in Form von Klärschlamm zugeführt wird. Der Grund für die Selektivität dieses Verkleinerungsverfahrens ist in der genannten EP-OS 82 815 bereits angegeben und soll hier nicht näher erläutert werden. Es sei lediglich erwähnt, dass sich hierzu eine Trommelmühle besonders eignet, wie sie in der CH-PS 587 680 beschrieben ist.

Die so aus der Siebstufe, besonders aber aus der selektiven Zerkleinerung erhaltene Müllfraktion ist reich an Papierfasern, und bildet ein bevorzugtes Ausgangsmaterial für die oben beschriebene mechanisch-thermische Vorbehandlung in einem anschliessenden Verfahrensschritt, worauf die endgültige Verpressung und Formgebung unmittelbar und möglichst noch im warmen Zustand des Materiales erfolgt. Die für diese zweistufige Druckbehandlung verwendeten Vorrichtungen und die dabei zweckmässig einzuhaltenden Bedingungen wurden oben bereits beschrieben. Dabei ergeben sich die genannten Temperatur-, Zeit- und Feuchtigkeitsbereiche aufgrund der unterschiedlichen Zusammensetzung des jeweils vorliegenden Abfallmateriales. Als Papierfasern kommen, wie erwähnt, nicht nur Fasern aus Papier, sondern auch für Papier in Frage, also vor allem Textil- und Holz- bzw. allgemein Pflanzenfasern, kurz jede Faser, die nach dem vorliegenden Verfahren zur Erzeugung einer Papier-Masché-ähnlichen Masse geeignet ist.

**Patentansprüche**

1. Verfahren zum Herstellen von Brennstoffpellets, -briketts aus einen Anteil an Papierfasern von mehr als 25 Gew.-% enthaltendem Abfallmaterial bzw. einer Müllfraktion, bei der das Material in zwei aufeinanderfolgenden Verfahrensschritten einem Druck und wenigstens zuletzt auch einer Formgebung ausgesetzt wird, dadurch gekennzeichnet, dass das einen Feuchtigkeitsgehalt von maximal 50 Gew.-% aufweisende Abfallmaterial im ersten einen Druck ausübenden Verfahrensschritt mechanisch erzeugter Hitze durch gleichzeitige Anwendung von Druck und Reibung ausgesetzt wird, und dass das so erhitzte Material der zweiten Druck ausübenden Verfahrensstufe unter gleichzeitiger Formgebung zugeführt wird.

2. Verfahren nach Anspruch 1, dadurch gekennzeichnet, dass der Feuchtigkeitsgehalt des Abfallmateriales vor dem ersten Verfahrensschritt nicht unter 20 Gew.-% liegt und/oder der Papierfaseranteil um 50 Gew.-% beträgt.

3. Verfahren nach Anspruch 1 oder 2, dadurch gekennzeichnet, dass das im wesentliche trockene Material durch die mechanisch erzeugte Hitze auf eine Temperatur von mindestens 60 °C, vorzugsweise von etwa 100 °C, gebracht wird.

4. Verfahren nach Anspruch 1, 2 oder 3, dadurch gekennzeichnet, dass das Material Druck und Reibung unter gleichzeitigem intensiven Kneten und gegebenenfalls Zerkleinern ausgesetzt wird.

5. Verfahren nach einem der Ansprüche 1 bis 4, dadurch gekennzeichnet, dass der erste Verfahrensschritt während einer Dauer von einer halben Minute bis fünf Minuten, vorzugsweise etwa während einer Minute, durchgeführt wird.

6. Verfahren nach einem der Ansprüche 1 bis 5, dadurch gekennzeichnet, dass während des ersten Verfahrensschrittes, gegebenenfalls unter Unterdruck, entgast wird.

7. Verfahren nach einem der Ansprüche 1 bis 6, dadurch gekennzeichnet, dass der erste Verfahrensschritt in wenigstens zwei Stufen vorgenommen wird, wobei in jeder Stufe das Material komprimiert und anschliessend druckentlastet wird.

8. Verfahren nach einem der Ansprüche 1 bis 7, dadurch gekennzeichnet, dass das Material durch die Behandlung des ersten Verfahrensschrittes auf eine Restfeuchtigkeit unter 25 Gew.-%, vorzugsweise zwischen 12 und 25 Gew.-%, insbesondere zwischen 18 und 20 Gew.-% gebracht wird.

9. Verwendung eines wenigstens eine Welle aufweisenden Extruders zur Durchführung des ersten Verfahrensschrittes des Verfahrens nach einem der Ansprüche 1 bis 8.

10. Verwendung eines Extruders nach Anspruch 9 mit mindestens einem der folgenden Merkmale :
der Extruder ist als Doppelwellenextruder ausgebildet ;
der Extruder besitzt wenigstens einen Abschnitt mit Knetwerkzeugen, wie Stiften, paddelförmigen Schneckenabschnitten od. dgl. ;
der Hohlraum zwischen Extrudergehäuse und Extruderwelle weist mindestens eine Verengung auf, die von einer Erweiterung gefolgt ist ;

das Extrudergehäuse ist heizbar, vorzugsweise als Doppelmantelgehäuse für den Durchlass eines Wärmeträgers, ausgebildet ;

der Extruder weist einen Gasauslass auf, der gegebenenfalls an eine Unterdruckquelle angeschlossen ist.

### Claims

1. A method for producing pellets or briketts of fuel material from refuse or a fraction of waste material containing an amount of paper fibres of more than 25 % by weight, the method comprising within two subsequent steps : subjecting the material to pressure and at least finely also to a shaping step, characterized in that the waste material, having a moisture content of 50 % by weight in maximum, is subjected to mechanically produced heat by simultaneously applying pressure and friction during the first pressure exerting step, and that the material, thus heated, is transferred to the second pressure exerting step, where it is simultaneously shaped.

2. A method according to claim 1, characterized in that before said first step, the moisture content of the waste material is not below 20 % by weight and/or the amount of paper fibres is about 50 % by weight.

3. A method according to claim 1 or 2, characterized in that the substantially dry material is brougth up to a temperature of at least 60 °C, preferably of about 100 °C, by the mechanically produced heat.

4. A method according to claim 1, 2 or 3, characterized in that the material is subjected to pressure and friction, while simultaneously intensively kneading and, if necessary, comminuting it.

5. A method according to any of claims 1 to 4, characterized in that the first step is carried out during a period of half a minute up to five minutes, preferably during about one minute.

6. A method according to any of claims 1 to 5, characterized in that degassing is effected during said first step, if necessary, under negative pressure.

7. A method according to any of claims 1 to 6, characterized in that the first step is carried out in at least two sub-steps, in each sub-step compressing the material and subsequently relieving it from pressure.

8. A method according to any of claims 1 to 7, characterized in that the material is brought to a residual moisture content below 25 % by weight, preferably between 12 and 25 % by weight, particularly between 18 and 20 % by weight, by the treatment of said first step.

9. The use of an extruder comprising at least one shaft for carrying out said first step of the method according to any of claims 1 to 8.

10. The use of an extruder according to claim 9, comprising at least one of the following characteristics :

the extruder is formed as a double-shaft extruder ;

the extruder comprises at least one section including kneading tools, such as pins, paddle-like screw sections or the like ;

the hollow space between the housing of the extruder and the shaft of the extruder comprises at least one constriction followed by an enlargement ;

the housing of the extruder is made heatable, and is preferably formed as a double casing for the passage of a heat carrier ;

the extruder comprises a gas outlet connected, if necessary, to a source of underpressure.

### Revendications

1. Procédé pour la fabrication de boulets, de briquettes de combustible en matière de rebut, contenant une part de fibres de papier de plus de 25 % en poids, ou en une fraction d'ordures ménagères, dans laquelle la matière est, en deux étapes successives du procédé, soumise à une pression et, à la fin au moins, à un modelage, caractérisé en ce que la matière de rebut présentant une teneur en humidité de 50 % en poids au maximum est, dans une première étape du procédé, comportant une pression, soumise à une chaleur produite mécaniquement par utilisation simultanée de pression et de frottement et en ce que la matière ainsi chauffée est amenée au deuxième niveau du procédé comportant la deuxième pression avec modelage simultané.

2. Procédé selon la revendication 1, caractérisé en ce que la teneur en humidité de la matière de rebut ne se situe pas, avant la première étape du procédé, en dessous de 20 % en poids et/ou la part de fibres de papier s'élève autour de 50 % en poids.

3. Procédé selon la revendication 1 ou 2, caractérisé en ce que la matière, sèche pour l'essentiel, est amenée par la chaleur produite mécaniquement à une température d'au moins 60 °C, de préférence à environ 100 °C.

4. Procédé selon la revendication 1, 2 ou 3, caractérisé en ce que la matière est soumise à la pression et au frottement avec un pétrissage simultané intensif et des fractionnements éventuels.

5. Procédé selon l'une des revendications 1 à 4, caractérisé en ce que la première étape du procédé est réalisée pendant une durée allant d'une demi-minute à cinq minutes, de préférence pendant une minute.

6. Procédé selon l'une des revendications 1 à 5, caractérisé en ce que, pendant la première étape du procédé, on dégaze, par dépression éventuellement.

7. Procédé selon l'une des revendications 1 à 6, caractérisé en ce que la première étape du procédé est exécutée en deux stades au minimum, la matière étant à chaque stade comprimée puis détendue.

8. Procédé selon l'une des revendications 1 à 7, caractérisé en ce que la matière, suite au traitement de la première étape du procédé, est amenée à une humidité résiduelle inférieure à 25 % en poids, de préférence entre 12 et 25 % en poids, en particulier entre 18 et 20 % en poids.

9. Utilisation, pour la réalisation de la première étape du procédé selon l'une des revendications 1 à 8, d'une extrudeuse présentant au moins un arbre.

10. Utilisation d'une extrudeuse selon la revendication 9 comportant au minimum l'une des caractéristiques suivantes :

l'extrudeuse est une extrudeuse à arbre double ;

l'extrudeuse possède au minimum une section comportant des instruments de pétrissage, tels que des broches, des sections de vis sans fin en forme de palette ou équivalents ;

l'espace creux entre le bâti de l'extrudeuse et l'arbre de celle-ci présente au minimum un étranglement suivi d'un élargissement ;

le bâti de l'extrudeuse est chauffable, constitué de préférence comme bâti à carcasse double pour le passage d'un caloporteur ;

l'extrudeuse présente une sortie de gaz, éventuellement reliée à une source de dépression.